# EUROPÄISCHE PATENTANMELDUNG

(11) **EP 4 563 886 A1**
(43) Veröffentlichungstag der Anmeldung: **04.06.2025**
(21) Anmeldenummer: 24215412.8
(22) Anmeldetag: 26.11.2024
(51) Int. Cl.: F23D 14/00, F23D 14/32, F23L 7/00

(54) **VERFAHREN UND VORRICHTUNG ZUM VERBRENNEN EINES BRENNSTOFFS UNTER EINSATZ VON IN EINER MEMBRANANLAGE ERZEUGTEM SAUERSTOFF**

(30) Priorität: 30.11.2023 DE 102023133616
(71) Anmelder: Messer SE & Co. KGaA, 65812 Bad Soden (DE); Hülsenbusch Apparatebau GmbH & Co. KG, 47906 Kempen (DE); Messer Austria GmbH, 2352 Gumpoldskirchen (AT); Die Fraunhofer-Gesellschaft e.V. (FhG), 80636 München (DE)
(72) Erfinder: Bender, Wolfgang, 47906 Kempen (DE); Spoljaric, Davor, 2103 Langenzerdorf (AT); Demuth, Dr. Martin, 2353 Guntramsdorf (AT); Kriegel, Ralf, 07629 Hermsdorf (DE)
(74) Vertreter: Münzel, Joachim R.

(57) **Zusammenfassung**

Um die Effizienz der Verbrennung eines Brennstoffs unter Verwendung von in einer Sauerstoff-Membrananlage gewonnenem Sauerstoff zu verbessern, wird erfindungsgemäß zumindest ein Teilstrom des bei der Verbrennung des Brennstoffs in einer Oxyfuel-Einrichtung entstehenden heißen Abgases als Heizgasstrom einem Rekuperator zugeführt und dort mit dem der Sauerstoff-Membrananlage zugeführten Frischluftstrom in indirekten thermischen Kontakt gebracht. Um die Temperatur des Rekuperators zu kontrollieren, wird ein Teilstrom des im Rekuperator beim thermischen Kontakt mit dem Frischluftstrom abgekühlten Heizgasstroms über eine Rückleitung zurückgeführt und dem dem Rekuperator zuzuführenden Heizgasstrom beigemischt.

## Beschreibung

Die Erfindung betrifft ein Verfahren sowie eine Vorrichtung zum Verbrennen eines Brennstoffs unter Einsatz von in einer Membrananlage erzeugtem Sauerstoff.

Um den für eine Verbrennung eines Brennstoffs mit hochreinem Sauerstoff erforderlichen Oxidanten zur Verfügung zu stellen, kommen in der Regel Verfahren der kryogenen Luftzerlegung oder der Druckwechseladsorption (PSA oder VPSA-Verfahren) zum Einsatz. Der spezifische Energieverbrauch steigt bei diesen Verfahren jedoch mit der angestrebten Reinheit des zu erzeugenden Sauerstoffs stark an, ebenso mit sinkender Anlagengröße. So benötigen kleinere PSA-Anlagen mit einem Ausstoß von bis zu ca. 1000 m³(i.N.)/h O₂ elektrische Energie von mindestens 1,0 kWh/m³(i.N.) O₂, liefern dabei aber nur Sauerstoff mit einer Reinheit von höchstens 95 Vol.-%. Aufgrund des hohen spezifischen Energieverbrauchs ist eine dezentrale Sauerstofferzeugung mit derartigen Anlagen für viele Anwendungen in der Verbrennungs- und Vergasungstechnik wirtschaftlich nicht sinnvoll.

Ein alternativer Ansatz zur Herstellung von Sauerstoff basiert auf einem Membrantrennprozess bei hohen Temperaturen, bei dem gemischt leitende keramische Membranen (MIEC - *Mixed lonic Electronic Conductor*) zum Einsatz kommen. Der Sauerstofftransport beruht auf dem simultanen Transport von Oxidionen einerseits und dem von Elektronen bzw. Defektelektronen andererseits durch das im Übrigen gasdichte keramische Material. Treibende Kraft der Ionenbewegung ist die Differenz der Sauerstoff-Partialdrücke p(O₂) zu beiden Seiten der Membran.

Der Stand der Entwicklung von MIEC-Materialien ist in [1-Sunarso, J., Baumann, S., Serra, J.M., Meulenberg, W.A., Liu, S., Lin, Y.S., da Costa, J.C.D.: Mixed ionicelectronic conducting (MIEC) ceramic-based membranes for oxygen separation. J. of Membr. Sc. 320 (2008) 13 - 41] dargestellt, der Stand der Entwicklung der Pilotanlagen und der Verfahrenstechnik zur Gastrennung in [2-Anderson, L.L., Armstrong, P.A., Broekhuis, R.R., Carolan, M.F., Chen, J., Hutcheon, M.D., Lewinsohn, C.A., Miller, C.F., Repasky, J.M., Taylor, D.M., Woods, C.M.: Advances in ion transport membrane technology for oxygen and syngas production. Solid State Ionics 288 (2016), S. 331 - 337] und [3- Chen, G., Feldhoff, A., Weidenkaff, A., Li, C., Liu, S., Zhu, X., Sunarso, J., Huang, K., Wu, X.-Y., Ghoniem, A.F., Yang, W., Xue, J., Wang, H., Shao, Z., Duffy, J.H., Brinkman, K.S., Tan, X., Zhang, Y., Jiang, H., Costa, R., Friedrich, K.A., Kriegel, R.: Roadmap on Sustainable Mixed lonic-Electronic Conducting Membranes.. Adv. Funct. Mater. (2021), 2105702, DOI: 10.1002/adfm.202105702].

Eine energetisch optimierte Verfahrensvariante zur Abtrennung von reinem Sauerstoff aus Luft wird in [4_EP 3 022 152 B1] beschrieben Das beanspruchte Trennverfahren setzt auf die Verwendung einer oder mehrerer Vakuumpumpen auf der Permeatseite der Membran, mittels der der Druck des Produktgases Sauerstoff an der Membran auf beispielsweise 50 mbar bis 100 mbar reduziert wird. Feedseitig herrscht Umgebungsdruck, so dass die häufig propagierte Kompression der Frischluft entfällt. Dadurch wird der Energiebedarf für die Kompression der Gase minimiert und eine Rückgewinnung der Kompressionsenergie erweist sich als obsolet. Gleichzeitig setzt das Verfahren zur Minimierung des Wärmebedarfs auf eine hohe Wärmerückgewinnung aus den eingesetzten Gasen, wofür bevorzugt regenerative Wärmetauscher eingesetzt werden. Zusätzlich wird auf eine nur teilweise Abtrennung des Sauerstoffs aus der Frischluft orientiert. Dadurch wird die Luftmenge begrenzt, ebenso die absoluten Wärmeverluste.

Der mit derartigen Sauerstoff-Membrananlagen gewonnene Sauerstoff kann ohne weiteres Reinheitsgrade von über 99 Vol.-% und mehr erreichen. Gleichzeitig ist der erforderliche Bedarf an elektrischem Strom für den Betrieb der Vakuumpumpe wesentlich geringer als der Energiebedarf von Druckwechselabsorptionsanlagen mit vergleichbarem O₂-Ausstoß. Die resultierende Einsparung an elektrischer Energie könnte diese Art der Sauerstoffproduktion gegenüber den genannten konventionellen Verfahren wesentlich wirtschaftlicher gestalten. Zudem könnten aufgrund des geringen Stickstoffanteils im Oxidanten NOₓ-Emissionen von nachgeschalteten Oxyfuel-Verbrennungsprozessen deutlich gemindert werden.

Im wirtschaftlichen Betrieb ist das MIEC-Membranverfahren auf vergleichsweise hohe Betriebstemperaturen in einem Temperaturfenster von etwa 750°C bis 900°C beschränkt. Bei niedrigeren Temperaturen als 750°C ist die Sauerstoff-Permeation in der Regel zu gering für eine technische Nutzung. Oberhalb 900°C kann es bei den bevorzugten MIEC-Materialien mit hohem Durchsatz wie z. B. BSCF (Ba_{0,5}Sr_{0,5}Co_{0,8}Fe_{0,2}O_{3-δ}) bereits zu Schäden an der Membran kommen, z. B. durch plastische Verformung (Kriechen) [5_Pecanac, G., Baumann, S., Malzbender, J.: Mechanical properties and lifetime predictions for Ba0.5Sr0.5Co0.8Fe0.2O3-δ membrane material. J. of Membr. Sc. 385- 386 (2011), S. 263- 268]. Je nach eingesetztem MIEC-Material tritt in bestimmten Temperaturbereichen auch ein Phasenzerfall der Materialien [6_Mueller, D.N., De Souza, R.A., Weirich, T.E., Roehrens, D., Mayer, J., Martin, M.: A kinetic study of the decomposition of the cubic perovskite-type oxide BaxSr1-xCo0.8Fe0.2O3-δ (BSCF) (x = 0.1 and 0.5). Phys. Chem. Chem. Phys., (2010) 12, S. 10320-10328] und ein Abfall der Sauerstoff-Permeation ein [7_Shao, Z., Weishen Yang, W., Cong, Y., Dong, H., Tong, J., Xiong, G.: Investigation of the permeation behavior and stability of a Ba0,5Sr0,5Co0,8Fe0,2O3-δ oxygen membrane, J. of Membr. Sc. 172 (2000), S. 177-188]. Deshalb muss für einen stabilen Langzeitbetrieb das thermische Betriebsfenster des Trennprozesses relativ genau eingehalten werden.

Da auch bei Verwendung hocheffizienter Gas-Wärmetauscher stets thermische Verluste auftreten, müssen diese durch eine geeignete Beheizung kompensiert werden. Die Beheizung muss darüber hinaus auch ein schnelles Anfahren des Trennprozesses ermöglichen, wofür typsicherweise eine wesentlich höhere Leistung als im stationären Betrieb erforderlich ist.

Für eine energieeffiziente Verfahrensführung wird in EP 3 022 152 B1 bereits der Einsatz von Regeneratoren zur Rückgewinnung der thermischen Energie vorgeschlagen. Bei der regenerativen Wärmerückgewinnung wird ein Frischluftstrom zyklisch aufeinanderfolgend in einer ersten Richtung und anschließend in Gegenrichtung durch die Regeneratoren und durch die Membrananordnung gefördert und dabei jeweils an der Retentatseite einer MIEC-Membrananordnung entlanggeführt. Im Anschluss an die MIEC-Membrananordnung durchläuft der O₂-abgereicherte Luftstrom (Abluft) jeweils einen Regenerator, der einen Großteil der im Luftstrom enthaltenen thermischen Energie vorübergehend speichert und nach dem Umschalten an die frisch zugeführte Luft abgibt. Auf diese Weise können mehr als 90 % der in der Abluft enthaltenen Wärmeenergie zurückgewonnen werden.

Die Notwendigkeit der Beheizung zum Ausgleich der thermischen Verluste führt entweder zu einem zusätzlichen Strombedarf oder zu Emissionen bei der Verfeuerung von Heizbrennstoffen. Im Vergleich mit effizienten VPSA-Anlagen werden dadurch die Vorteile des niedrigen Stromverbrauchs für die Gastrennung und der hohen Reinheit des erzeugten Sauerstoffsteilweise wieder aufgehoben.

Aufgabe der vorliegenden Erfindung ist es, die Wirtschaftlichkeit einer auf Basis eines MIEC-Membranverfahrens arbeitenden Vorrichtung zur Erzeugung von Sauerstoff, der in einem Verfahren zur Verbrennung eines Brennstoffs eingesetzt wird, entscheidend zu verbessern.

Gelöst ist diese Aufgabe durch ein Verfahren mit den Merkmalen des Anspruchs 1 und durch eine Vorrichtung mit den Merkmalen des Anspruchs 8. Vorteilhafte Ausgestaltungen der Erfindung sind in den Unteransprüchen angegeben.

Das erfindungsgemäße Verfahren verbindet einen in einer Oxyfuel-Einrichtung stattfindenden Oxyfuel-Prozess, bei dem ein Brennstoff mit Sauerstoff unter Entstehung eines heißen Abgases verbrannt wird, mit einem Verfahren zur Sauerstofferzeugung in einer Sauerstoff-Membrananlage zur Erzeugung des im Oxyfuel-Prozess eingesetzten Sauerstoffs, wobei die Abwärme des Abgases aus dem Oxyfuel-Prozess zum Beheizen des in der Sauerstoff-Membrananlage eingesetzten Frischluftstroms verwendet wird. In der Sauerstoff-Membrananlage erfolgt durch Anlegen einer Druckdifferenz an einer darin enthaltenen MIEC-Membrananordnung die Abtrennung eines Sauerstoffstroms aus einem auf eine Betriebstemperatur der MIEC-Membranordnung (ca. 830°C bis 850°C) erhitzten Frischluftstrom. Die Druckdifferenz wird bevorzugt durch Anlegen eines Vakuums an der Permeatseite der MIEC-Membrananordnung realisiert, kann jedoch auch durch Anlegen eines Überdrucks auf der Retentatseite erfolgen. Der nach Abtrennung des Sauerstoffs auf der Retentatseite der MIEC-Membrananordnung verbliebene Abluftstrom wird abgeführt, wobei sein noch beträchtlicher Gehalt an Wärme zum Beheizen eines der MIEC-Membrananordnung anschließend zugeführten Frischluftstroms eingesetzt wird; beispielsweise durchläuft der Abluftstrom einen Regenerator, dessen Wärme anschließend zum Aufheizen des Frischluftstroms genutzt wird. Der an der Permeatseite der MIEC-Membrananordnung gewonnene Sauerstoffstrom wird aus der Sauerstoff-Membrananlage abgezogen und der Oxyfuel-Einrichtung zugeführt. Erfolgt die Erzeugung der Druckdifferenz an der MIEC-Membrananordnung durch Anlegen eines Vakuums an der Permeatseite, wird der Sauerstoffstrom bevorzugt vor Erreichen einer dazu verwendeten Vakuumpumpe in einem Wärmetauscher gekühlt, wobei die dabei abgegebene Wärme beispielsweise zur Beheizung des Frischluftstroms genutzt werden kann.

Der aus der Sauerstoff-Membrananlage abgezogene Sauerstoffstrom wird im Oxyfuel-Prozess zur Verbrennung eines Brennstoffs, beispielsweise Erdgas oder Wasserstoff, genutzt. Der Wärmeinhalt des dabei entstehenden Abgases wird seinerseits dazu genutzt, den der MIEC-Membrananordnung zuzuführenden Frischluftstrom zu erwärmen. Dies erfolgt an einem indirekten Wärmetauscher (Rekuperator), an dem entweder ein regelbarer Abgasstrom aus dem Oxyfuel-Prozess als Heizgasstrom mit dem der MIEC-Membrananordnung zuzuführenden Frischluftstrom in Wärmekontakt gebracht wird oder ein regelbarer Teilstrom des der MIEC-Membrananordnung zuzuführenden Frischluftstroms mit dem Abgas aus dem Oxyfuel-Prozess in Wärmekontakt gebracht und dadurch beheizt wird.

Bevorzugt werden zwischen 80% und 90% der zur Erwärmung des Frischluftstroms auf die Betriebstemperatur der MIEC-Membrananordnung erforderlichen Wärmeenergie aus der Abwärme des Abluftstroms gewonnen; die restliche Wärmeenergie wird, bevorzugt vollständig, über den Rekuperator zugeführt. Eine zusätzliche Beheizung des Frischluftstroms, etwa durch eine elektrische Heizung oder eine Zufeuerung, ist nicht erforderlich, freilich im Rahmen der Erfindung auch nicht ausgeschlossen.

Die Temperatur des im Oxyfuel-Prozess entstehenden Abgases liegt bevorzugt oberhalb der Betriebstemperatur der MIEC-Membranordnung von beispielsweise 830°C bis 850°C. Bevorzugt beträgt die Abgastemperatur des Oxyfuel-Prozesses über 1100°C, besonders bevorzugt über 1400°C. Beispielsweise handelt es sich bei der Oxyfuel-Einrichtung um einen Ofen zum Aufschmelzen eines Behandlungsguts, beispielsweise um einen Glasschmelzofen.

Bevorzugt ist die Sauerstoff-Membrananlage so aufgebaut, dass sie mit wechselnden Strömungsrichtungen betrieben werden kann, d.h. ein Luftströmungsweg in der Sauerstoff-Membranlage wird zyklisch zunächst von einer ersten Luftzuführung zu einer zweiten Luftzuführung und nach einer gewissen Zeitdauer in Gegenrichtung, also von der zweiten Luftzuführung zur ersten Luftzuführung, von einem Frischluftstrom durchströmt. Im Luftströmungsweg zwischen den beiden Luftzuführungen befindet sich die MIEC-Membrananordnung. In jedem der Durchläufe wird die Retentatseite (Feedgaseite) der MIEC-Membranordnung von einem erwärmten Frischluftstrom angeströmt und durch Anlegen einer Druckdifferenz an der Permeatseite der MIEC-Membrananordnung Sauerstoff aus dem Frischluftstrom gewonnen. Nach Durchlaufen der MIEC-Membrananordnung wird aus dem jeweiligen Abluftstrom Wärme auf einen Regenerator übertragen. Dieser Regenerator dient bei der anschließenden Umkehrung der Strömungsrichtung zusammen mit einem vom Abgas des Oxyfuel-Prozesses beheizten Rekuperator dazu, den nunmehrigen Frischluftstrom zu erwärmen, bevor dieser die MIEC-Membrananordnung erreicht. Die Sauerstoff-Membrananlage ist in diesem Fall also mit mindestens zwei Regeneratoren und mindestens zwei Rekuperatoren ausgerüstet, von denen jeweils mindestens einer der beiden Luftzuführungen angeordnet ist.

Um den Rekuperator thermisch nicht zu überlasten und überdies die Temperatur des Heizgases einstellen zu können, wird ein Teilstrom des zuvor im Rekuperator eingesetzten Heizgasstroms im Kreislauf geführt und nach Durchlaufen des Rekuperators dem Strom des dem Rekuperator zuzuführenden Heizgases beigemischt. Dabei ist zu beachten, dass der Heizgasstrom zur Einhaltung des thermischen Betriebsfensters der Sauerstoff-Separation einerseits gekühlt wird, andererseits genug Temperaturunterschied für den Wärmeübergang auf den Frischluftstrom verbleibt.

Im einfachsten Fall erfolgt die Teilstromrückführung durch ein in der Rückleitung angeordnetes regelbares Heißgasgebläse. Zur Vermeidung von beweglichen und thermisch belasteten Einbauten kann der zum Rekuperator zurückgeführte Teilstrom des Heizgasstroms jedoch auch unter Einsatz eines Treibgasstroms angetrieben werden. Der Treibgasstrom durchläuft mit hoher Geschwindigkeit eine Injektordüse, beispielsweise einen Gasstrahl-Injektor oder einen Luftstromverstärker (Coanda-Düse) und erzeugt dort einen Unterdruck, durch den der zurückzuführende Teilstrom des Heizgases eingesaugt und gemeinsam mit dem Treibgasstrom in den dem Rekuperator zuzuführenden Heizgasstrom eingespeist wird.

Als Treibgasstrom kann beispielsweise ein Strom aus Kohlendioxid zum Einsatz kommen, der aus dem Abgas eines mit Kohlenwasserstoff als Brennstoff betriebenen Oxyfuel-Prozesses selbst gewonnen wurde. Dabei wird das zumindest überwiegend aus Wasserdampf und Kohlendioxid bestehende Abgas nach Durchlaufen des Rekuperators einem Dampfkondensator zugeführt, in dem das im Abgas enthaltene Wasser sowie ggf. weitere unerwünschte Inhaltstoffe abgetrennt werden, bis ein weitgehend reines Kohlendioxidgas erhalten wird. Von diesem wird zumindest ein Teilstrom in einem Verdichter verdichtet und in der oben beschriebenen Weise als Treibgasstrom eingesetzt.

Alternativ oder ergänzend dazu kann der nach Durchlaufen des Rekuperators immer noch hohe Wärmeinhalt des Heizgases dazu genutzt werden, in einem Verdampfer Heißdampf zu erzeugen, der anschließend in der oben beschriebenen Weise als Treibgasstrom eingesetzt wird.

Eine besonders vorteilhafte Ausgestaltung der Erfindung sieht vor, dass der Mengenstrom des zum Rekuperator zurückgeführten Teilstroms des Heizgasstroms in Abhängigkeit von einer beispielsweise in der Sauerstoff-Membrananlage oder im Heizgasstrom gemessenen Temperatur mittels einer Steuereinheit geregelt wird.

Eine vorteilhafte Alternative zu der zuvor beschriebenen Regelung der Temperatur des der MIEC-Membrananordnung zuzuführenden Frischluftstroms über die Temperatur des im Rekuperator eingesetzten Heizgases sieht vor, dass von dem der MIEC-Membrananordnung zuzuführenden Frischluftstrom ein regelbarer Teilstrom abgezweigt, im Rekuperator mit dem Heizgasstrom in thermischen Kontakt gebracht und dem übrigen Frischluftstrom vor dessen Zuführung an die MIEC-Membrananordnung beigemischt wird. Durch die Einstellung der Mengenströme der im Rekuperator beheizten bzw. nicht beheizten Teilströme des Frischluftstroms kann die Temperatur des Frischluftstroms genau eingestellt werden.

Die Aufgabe der Erfindung wird auch durch eine Vorrichtung zum Verbrennen eines Brennstoffs unter Einsatz von in einer Membrananlage erzeugtem Sauerstoff mit den Merkmalen des Anspruchs 8 gelöst.

Eine erfindungsgemäße Vorrichtung umfasst eine Oxyfuel-Einrichtung und eine mit dieser zusammenwirkende Sauerstoff-Membrananlage. Die Sauerstoff-Membrananlage weist ein Gehäuse auf, in welchem ein Luftströmungsweg, eine Sauerstoffausleitung und eine den Luftströmungsweg und die Sauerstoffausleitung gasdicht trennende MIEC-Membrananordnung angeordnet ist, wobei letztere nur für Sauerstoff permeabel ist. Die Sauerstoffausleitung ist mit einer Vakuumpumpe und der Luftströmungsweg mit einem Gebläse zum Anströmen der MIEC-Membrananordnung mit einem Frischluftstrom ausgerüstet. In einer - in Richtung des Frischluftstroms gesehen - stromauf zur MIEC-Membrananordnung angeordneten ersten Luftzuführung des Luftströmungsweges ist ein Rekuperator zum Aufnehmen von Wärme aus einem über eine Heizgaszuleitung herangeführtem Heizgasstrom angeordnet. Die Oxyfuel-Einrichtung, in der die Verbrennung eines Brennstoffs mit Sauerstoff erfolgt, ist mit einer Brennstoffzuleitung, einer Sauerstoffzuleitung und einer Abgasleitung ausgerüstet, wobei die Sauerstoffzuleitung der Oxyfuel-Einrichtung mit der Sauerstoffausleitung der Sauerstoff-Membrananlage und die Abgasleitung der Oxyfuel-Einrichtung mit der den Rekuperator in der Luftzuführung der Sauerstoff-Membrananlage durchlaufenden Heizgasleitung strömungsverbunden sind. Weiterhin sind Mittel zum Regeln des Mengenstroms des dem Rekuperator zugeführten Heizgases und/oder dem Mengenstrom des dem Rekuperator zugeführten Frischluftstroms vorgesehen.

In der Oxyfuel-Einrichtung erfolgt somit, beispielswiese an einer Brenneranordnung, die Verbrennung des Brennstoffs unter Verwendung des in der Membraneinrichtung gewonnenen Sauerstoffs. Die erfindungsgemäße Vorrichtung nutzt zumindest einen wesentlichen Teil der Abwärme des bei der Verbrennung des Brennstoffs entstehenden Abgases dazu, eine Betriebstemperatur der MIEC-Membrananordnung von beispielsweise 830°C bis 850°C aufrecht zu erhalten. Die erfindungsgemäße Vorrichtung arbeitet daher besonders energieeffizient.

In einer besonders vorteilhaften Ausgestaltung der Erfindung erfolgt eine zusätzliche Rückgewinnung von Energie, indem ein Teil der im Abluftstrom enthaltenen Wärme zur Aufheizung eines Regenerators genutzt wird, der anschließend zur Beheizung eines der MIEC-Anordnung zuzuführenden Frischluftstroms verwendet wird. Dazu mündet der Luftströmungsweg an einer zweiten Luftzuführung aus dem Gehäuse, und es ist eine Einrichtung zum wechselweisen Führen eines Frischluftstroms durch den Luftströmungsweg von der ersten Luftzuführung über die MIEC-Membrananordnung zur zweiten Luftzuführung und in Gegenrichtung zurück vorgesehen. In jeder der Luftzuführungen ist ein Regenerator vorgesehen, der in der ersten Strömungsrichtung Wärme aus dem Abluftstrom der MIEC-Membrananordnung aufnimmt und in der zweiten Strömungsrichtung die aufgenommene Wärme an den Frischluftstrom abgibt. Weiterhin ist in jeder der Luftzuführungen ein Rekuperator zum Aufnehmen von Wärme aus einem über eine Heizgaszuleitung herangeführten Heizgasstrom angeordnet. Die Rekuperatoren bzw. die zu diesen führenden Heizgasleitungen sind bevorzugt mit einer Schaltung ausgerüstet, die es ermöglicht, einen Rekuperator nur dann aktiv zu schalten, d.h. vom Heizgasstrom durchfließen zu lassen, wenn die mit diesem Rekuperator bestückte Luftzuführung von einem in Richtung der MIEC-Membrananordnung strömenden Frischluftstrom durchflossen wird. Das im Rekuperator abgekühlte Heizgas wird anschließend über einen stromab zum Rekuperator angeordneten Abschnitt der Heizgasleitung abgeführt.

Die Einrichtung zum wechselweisen Führen eines Frischluftstroms durch den Luftströmungsweg umfasst bevorzugt ein oder mehrere Gebläse, die so angeordnet sind, dass die Strömungsrichtung im Luftströmungsweg geändert werden kann. Die Änderung der Strömungsrichtung kann beispielsweise durch Umkehrung der Arbeitsrichtung eines Gebläses, die wechselweise Schaltung von in entgegengesetzten Richtungen arbeitenden Gebläsen oder durch eine geeignete Luftleitung erfolgen, in der steuerbare Klappen die wechselweise Zuführung des durch ein Gebläse erzeugten Frischluftstroms einer der Luftzuleitungen ermöglichen.

Zur Steuerung der Temperatur des dem Rekuperator oder den Rekuperatoren zugeführten Heizgases und zur Schonung des Rekuperatormaterials zweigt vorteilhafterweise von der Heizgasleitung, stromab zu dem Rekuperator bzw. den Rekuperatoren, eine mit einer Gas-Fördereinrichtung ausgerüstete Rückleitung zum Rückführen eines Teilstroms des durch den jeweils aktiven Rekuperator geführten Heizgasstroms ab, die stromauf zu diesem Rekuperator in die Heizgasleitung einmündet. Bevorzugt kann dabei der Mengenstrom des jeweils durch die Rückleitung geführten Teilstroms mittels einer geeigneten Steuerung geregelt werden.

Die in der Rückleitung angeordnete Gas-Fördereinrichtung weist beispielsweise eine Injektordüse auf, die zum einen mit einer Treibgaszuleitung für einen unter Druck stehenden Treibgasstrom und zum anderen mit einer Zuleitung für den zurückzuführenden Teilstrom des Heizgases strömungsverbunden ist. Als "Injektordüse" soll hier allgemein eine Einrichtung verstanden werden, bei der ein mit hoher Geschwindigkeit durch einen Strömungsweg in der Injektordüse geführter Treibgastrom einen Unterdruck erzeugt, durch den ein zweiter Gasstrom, hier der zurückzuführende Teilstrom des Heizgases, eingesaugt und vom Treibgasstrom mitgerissen wird. Der zurückgeführte Teilstrom des Heizgases wird gemeinsam mit dem Treibgastrom in die Heizgaszuleitung, stromauf zu den Rekuperatoren, eingespeist. Bei der Injektordüse handelt es sich beispielsweise um einen Gasstrahl-Injektor, eine Gasstrahlpumpe oder einen Luftstrom-Verstärker.

In einer ersten vorteilhaften Ausgestaltung dieser Alternative ist die Abgasleitung der Oxyfuel-Einrichtung, stromab zu den Regeneratoren, mit einer Einrichtung zum Abscheiden von Kohlendioxid verbunden, die eine Kohlendioxid-Abzugsleitung aufweist. In der Kohlendioxid-Abzugsleitung für das Kohlendioxid ist wiederum ein Kompressor zum Erzeugen eines verdichteten Kohlendioxidstroms angeordnet. Die Kohlendioxid-Abgasleitung ist mit der Treibgaszuleitung der Injektordüse strömungsverbunden und ermöglicht so den Einsatz des verdichteten Kohlendioxidstroms als Treibgasstrom in der Injektordüse.

Eine andere vorteilhafte Ausgestaltung zur Erzeugung des Treibgasstroms sieht vor, dass die Abgasleitung der Oxyfuel-Einrichtung, stromab zu den Regeneratoren, mit einer Einrichtung zum Erzeugen von Heißdampf aus Wasser strömungsverbunden ist, die mit einer Heißdampfleitung zum Abführen des erzeugten Heißdampft ausgerüstet ist. Die Heißdampfleitung ist mit der Treibgaszuleitung der Injektordüse strömungsverbunden und ermöglicht so den Einsatz des Heißdampfs als Treibgasstrom in der Injektordüse.

Alternativ oder ergänzend zum Einbau eines Injektors in der Rückleitung kann diese auch mit einem Heißgasgebläse ausgerüstet sein, mittels dem der zurückzuführende Teilstrom des Heizgases durch die Rückleitung gefördert wird.

In der Sauerstoff-Membrananlage bestehen verschiedene vorteilhafte Möglichkeiten, eine MIEC-Membrananordnung sowie Rekuperatoren und Regeneratoren im Strömungsweg des Frischluftstroms anzuordnen. Eine erste zweckmäßige Variante sieht vor, dass in jeder der beiden Luftzuführungen, zwischen denen die MIEC-Membrananordnung angeordnet ist, jeweils - in Strömungsrichtung des Frischluftstroms gesehen - nacheinander ein Rekuperator und ein Regenerator vorgesehen ist. Da der Rekuperator in diesem Falle von einem kalten Frischluftstrom angeströmt wird, handelt es sich um einen Niedertemperaturrekuperator, der aus vergleichsweise wenig temperaturbeständigen Materialien aufgebaut sein kann. Eine zweite Variante sieht vor, dass in jeder der beiden Luftzuführungen, zwischen denen die MIEC-Membrananordnung angeordnet ist, jeweils - in Strömungsrichtung des Frischluftstroms gesehen - nacheinander ein Regenerator und ein Rekuperator angeordnet ist. Bei dieser Variante wird der Wärmeinhalt des Abgases in hohem Maße genutzt. Da der Rekuperator bei dieser Variante jedoch als von der im Regenerator zuvor erhitzten Frischluftstrom angeströmt wird, muss der Rekuperator als Hochtemperaturrekuperator aus hochtemperaturfesten Materialien aufgebaut sein. Eine dritte Variante sieht vor, in jeder der beiden Luftzuführungen, zwischen denen die MIEC-Membrananordnung angeordnet ist, jeweils - in Strömungsrichtung des Frischluftstroms gesehen - einen Niedertemperaturrekuperator strömungstechnisch vor und einen Hochtemperaturrekuperator strömungstechnisch hinter dem Regenerator vorzusehen, welche Rekuperatoren dabei im Gegenstrom zum Frischluftstrom vom Heizgasstrom durchströmt werden.

Alternativ oder ergänzend zur Regelung des Heizgasstroms am Rekuperator kann die erste Luftzuleitung mit einer Eingangsleitung und einer an dem Rekuperator oder den Rekuperatoren vorbeiführende Bypassleitung strömungsverbunden sein. Beide Leitungen sind mit unabhängig voneinander regelbaren Frischluftgebläsen ausgerüstet. Mittels einer Steuerung können die Frischluftgebläse angesteuert und so die Mengenströme durch die beiden Leitungen variiert werden. Die über die Eingangsleitung und die Bypassleitung geführten Teilströme vereinigen sich vor Erreichen der MIEC-Membrananordnung zum Frischluftstrom. Die Regelung der beiden Mengenströme führt so zu einer Temperaturregelung des insgesamt der MIEC-Membrananordnung zuzuführenden Frischluftstroms. Ist neben der ersten Luftzuführung auch eine zweite Luftzuführung vorhanden und eine wechselweise Anströmung der MIEC-Membrananordnung mit Frischluft aus den Luftzuführungen vorgesehen, kann dieser Aufbau an beiden Luftzuführungen entsprechend ausgebildet sein; hier ist jedoch auch eine alternative Ausgestaltung vorstellbar, bei der die Eingangsleitung und/oder die Bypassleitung jeweils eine mit beiden Luftzuführungen strömungsverbundene Leitungsanordnung umfasst, in der nur ein mit der Heizgaszuleitung wirkverbundener Rekuperator sowie ein Frischluftgebläse angeordnet ist und in der mittels einer Klappenanordnung eine wechselweise Ansteuerung der beiden Luftzufuhren mit Frischluft möglich ist.

Das erfindungsgemäße Verfahren und die erfindungsgemäße Vorrichtung können in allen Prozessen zum Einsatz kommen, bei denen in der Oxyfuel-Einrichtung bei der Verbrennung des Brennstoffs mit dem in der Sauerstoff-Membrananlage erzeugtem Sauerstoff hohe Betriebstemperaturen verlangt werden, die zu entsprechend hohen Abgastemperaturen führen. Eine besonders bevorzugte Ausgestaltung des erfindungsgemäßen Verfahrens bzw. der erfindungsgemäßen Vorrichtung sieht daher vor, als Oxyfuel-Einrichtung eine Einrichtung zum Schmelzen oder Flüssighalten von Glas vorzusehen. Bei derartigen Einrichtungen kommt es zu Temperaturen im Abgas von 1400°C und mehr, die sich besonders gut zur Beheizung einer Sauerstoff-Membrananlage nutzen lassen.

Anhand der Zeichnungen sollen Ausführungsbeispiele der Erfindung näher erläutert werden. In schematischen Ansichten zeigen:
- Fig. 1:: Eine erfindungsgemäße Vorrichtung in einer ersten Ausführungsform,
- Fig. 2:: Eine erfindungsgemäße Vorrichtung in einer zweiten Ausführungsform,
- Fig. 3a-c:: Verschiedene, in einer erfindungsgemäßen Vorrichtung gemäß Fig. 1 und 2 einsetzbare Sauerstoff-Membrananlagen,
- Fig. 4:: Eine erfindungsgemäße Vorrichtung in einer dritten Ausführungsform

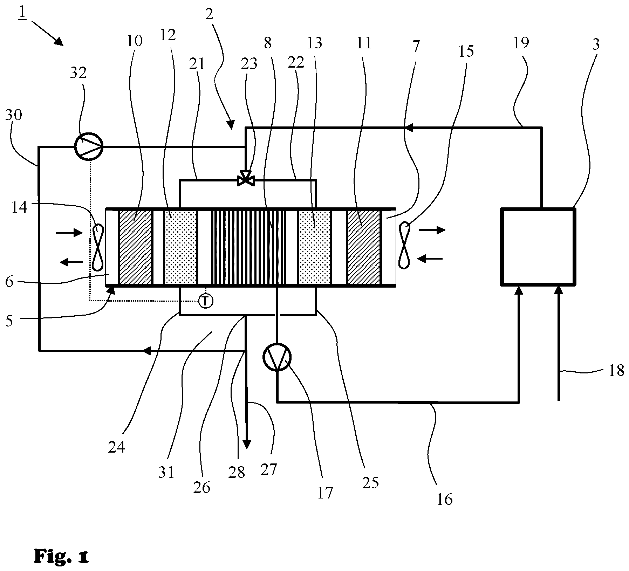

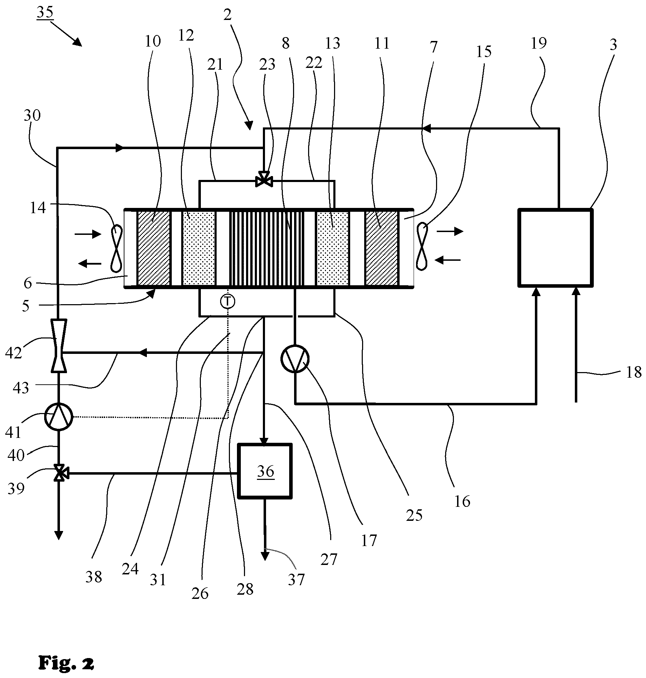

Die in Fig. 1 und Fig. 2 gezeigten Vorrichtungen unterscheiden sich lediglich im Aufbau des Rezirkulationskreislaufs im Bereich der jeweiligen Rekuperatoren; ansonsten gleiche Bestandteile werden in den Ausführungsbeispielen daher mit gleichen Bezugszeichen versehen.

Die in Fig. 1 gezeigte Vorrichtung 1 weist eine Sauerstoff- Membrananlage 2 zum Erzeugen von Sauerstoff und eine Oxyfuel-Einrichtung 3 zum Verbrennen eines Brennstoffs mit Sauerstoff auf.

Die Sauerstoff-Membrananlage 2 umfasst ein Gehäuse 5 mit einer ersten Luftzuführung 6 und einer zweiten Luftzuführung 7. Weiterhin ist im Gehäuse 5 eine MIEC (*Mixed-Ion-Electron-Conductor*) - Membrananordnung 8 gasdicht und druckfest eingebaut. In den Luftzuführungen 6, 7 sind jeweils ein Regenerator 10, 11 und ein Rekuperator 12, 13 angeordnet.

Bei der MIEC-Membrananordnung 8 handelt es sich um eine Rohrleitungsanordnung, die aus einer Membran besteht oder eine solche abschnittsweise aufweist, die eine hochselektive Abtrennung von Sauerstoff aus einem Frischluftstrom ermöglicht. Beispielsweise besteht die Membran aus einem Barium-Strontium-Kobalt-Eisenoxid (BSCF), dessen Kristallstuktur der Perowskitstruktur des ABOs-Strukturtyps entspricht. Im Rahmen der Erfindung sind jedoch auch andere Sauerstoffionen-leitende Membranen einsetzbar. Beispiele für den Aufbau von Sauerstoff-Membrananlagen finden sich unter anderem in der EP 3 022 152 B1 oder der EP 3 212 569 A1, auf die hier ausdrücklich Bezug genommen wird, ohne dass dadurch jedoch die Erfindung auf die dort beschriebenen Ausgestaltungen von Membrananlagen beschränkt werden soll.

Die Sauerstoff-Membrananlage 2 ist so aufgebaut, dass ein Frischluftstrom durch einen Luftströmungsweg im Gehäuse 5 wechselweise von der ersten Luftzuführung 6 zur zweiten Luftzuführung 7 und zurück, von der zweiten Luftzuführung 7 zur ersten Luftzuführung 6 geführt werden kann. Zum Fördern des jeweiligen Frischluftstroms dienen in den hier gezeigten Ausführungsbeispielen Gebläse 14, 15 am Eingang einer jeden Luftzuführung 6, 7. Es sind jedoch auch andere Anordnungen zum Antreiben der Frischluft in den Luftzuführungen einsetzbar. Beispielsweise kann eine hier nicht gezeigte Leitungsanordnung zum Einsatz kommen, in der ein einzelnes Gebläse sowie steuerbare Klappen angeordnet sind, mittels denen die wahlweise Zuführung eines vom Gebläse erzeugten Frischluftstroms auf eine der Luftzuführungen 6, 7 - und die entsprechende Ausleitung des Abluftstroms aus der Luftzuführung 7, 6 - einstellbar ist.

Im ersten Falle tritt der Frischluftstrom an der Luftzuführung 6 in das Gehäuse 5 ein, durchströmt nacheinander den Regenerator 10, den Rekuperator 12, die MIEC-Membrananordnung 8, den Rekuperator 13 und den Regenerator 11 und verlässt das Gehäuse 5 als Abluftstrom über die Luftzuführung 7. Dabei wird der Frischluftstrom im Rekuperator 12 und dem Regenerator 10 auf eine Betriebstemperatur der MIEC-Membrananordnung 8 von beispielsweise zwischen 830°C und 850°C gebracht und zur Retentatseite der MIEC-Membrananordnung 8 geführt. Dort findet die Abtrennung von Sauerstoff aus dem Frischluftstrom statt, der so zum Sauerstoff-abgereicherten Abluftstrom wird. Dieser durchquert den - in dieser Fahrweise außer Betrieb befindlichen - Rekuperator 13, überträgt anschließend einen wesentlichen Teil seiner Wärme auf das Material des Regenerators 10, das dadurch erhitzt wird, und verlässt das Gehäuse 5 über die Luftzuführung 7. Der an der Permeatseite der MIEC-Membrananordnung 8 abgetrennte Sauerstoffstrom wird über eine Sauerstoffausleitung 16 aus der Sauerstoff-Membrananlage 2 abgeführt.

Bei der umgekehrten Führung tritt der Frischluftstrom an der Luftzuführung 7 in das Gehäuse 5 ein, durchströmt nacheinander den zuvor erhitzten Regenerator 10 und den Rekuperator 13 und wird so auf die Betriebstemperatur der MIEC-Membrananordnung 8 gebracht und zur Retentatseite der MIEC-Membrananordnung 8 geführt. Dort findet die Abtrennung von Sauerstoff aus dem Frischluftstrom statt, der so zum Sauerstoff-abgereicherten Abluftstrom wird. Dieser durchquert den - in dieser Fahrweise außer Betrieb befindlichen - Rekuperator 12, gibt im Regenerator 10 einen wesentlichen Teil seiner Wärme an dessen Material ab, das dadurch erhitzt wird, und verlässt das Gehäuse 5 über die Luftzuführung 6. Der an der Permeatseite der MIEC-Membrananordnung 8 abgetrennte Sauerstoffstrom wird über eine Sauerstoffausleitung 16 aus der Sauerstoff-Membrananlage 2 abgeführt.

Die Rekuperatoren 12, 13 werden in der unten näher beschriebenen Weise von einem Heizgasstrom durchströmt, der an einer Wärmetauscherfläche des jeweiligen Rekuperators 12, 13 mit dem Frischluftstrom in indirekten Wärmekontakt gebracht werden kann. Eine zusätzliche Beheizung des Frischluftstroms, beispielsweise mittels einer im Luftströmungsweg zwischen den Luftzuführungen 6, 7 angeordneten elektrischen Heizung oder mittels Zufeuerung ist bei den hier gezeigten Ausführungsbeispielen nicht erforderlich, jedoch erfindungsgemäß auch nicht ausgeschlossen.

Es versteht sich von selbst, dass die hier gezeigte lineare Anordnung von Regeneratoren 10, 11, Rekuperatoren 12, 13 und MIEC-Membrananordnung 8 in erster Linie der Veranschaulichung des Funktionsprinzips der erfindungsgemäßen Vorrichtung dient und keineswegs als Beschränkung der Erfindung auf ein bestimmtes Design der in den Fig. 1 und Fig. 2 gezeigten Vorrichtungen aufzufassen ist.

Um das Abtrennen des Sauerstoffs in der MIEC-Membrananordnung 8 zu ermöglichen, ist das Anlegen einer Druckdifferenz zu beiden Seiten der Membran der MIEC-Membrananordnung erforderlich. In den hier gezeigten Ausführungsbeispielen wird diese Druckdifferenz durch Anlegen eines Vakuums mittels einer in der Sauerstoffausleitung 16 angeordneten Vakuumpumpe 17 realisiert, aufgrund der an der MIEC-Membrananordnung 8 permeatseitig ein Druck von beispielsweise 50 bis 100 mbar absolut erzeugt wird, während der Druck retentatseitig etwa auf Atmosphärendruck oder darüber liegt. Der Durchsatz an Frischluft kann im hier gezeigten Ausführungsbeispiel durch die drehzahlgeregelten Gebläse 14, 15 erzeugt werden; beispielsweise wird er so eingestellt, dass der Sauerstoffpartialdruck des Frischluftstroms nach Durchlaufen der MIEC-Membrananordnung 8 nur geringfügig über dem Sauerstoffpartialdruck auf der Permeatseite der MIEC Membrananordnung 8 liegt.

Der über die Sauerstoffausleitung 16 abgezogene Sauerstoff wird der Oxyfuel-Einrichtung 3 zugeführt, um in dieser als Oxidant zur Verbrennung eines über eine Brennstoffzuleitung 18 herangeführten Brennstoffs zu dienen. Die Oxyfuel-Einrichtung 3 weist in hier nicht gezeigter Weise einen Brennraum auf, in dem der über die Brennstoffzuleitung 18 herangeführte Brennstoff und der über die Sauerstoffausleitung 16 herangeführte Sauerstoff unter starker Wärmeentwicklung verbrannt werden. Beispielsweise handelt es sich bei der Oxyfuel-Einrichtung um einen Ofen zum Schmelzen von Metall oder Glas. Bei dem über die Brennstoffzuleitung herangeführten Brennstoff handelt es sich bevorzugt um einen gasförmigen Brennstoff, wie beispielsweise Wasserstoff oder Erdgas.

Das entstehende Abgas wird über eine Abgasleitung 19 aus der Oxyfuel-Einrichtung 3 abgezogen und nachfolgend als Heizgas in den Rekuperatoren 12, 13 eingesetzt. Dazu weisen die Rekuperatoren 12, 13 jeweils eine Heizgaszuleitung 21, 22 auf, die mit der Abgasleitung 19 strömungsverbunden ist. Über eine steuerbare Klappen- oder Ventilanordnung 23 kann das Abgas wahlweise in die Heizgaszuleitung 21 oder die Heizgasleitung 22 eingeleitet und somit entweder Rekuperator 12 oder Rekuperator 13 beheizt werden. Die Beheizung eines Rekuperators 12, 13 erfolgt stets dann, wenn die Strömungsrichtung der Frischluftzufuhr in der Sauerstoff-Membrananlage 2 so eingestellt ist, dass sich dieser Rekuperator 12, 13 - in Strömungsrichtung des Frischluftstroms gesehen - stromauf zur MIEC-Membrananordnung 8 befindet; die Beheizung des Rekuperators 12, 13 sorgt also zusätzlich zum Regenerator 10, 11 für eine Erwärmung des der MIEC-Membrananordnung 8 zuzuführenden Frischluftstroms.

Das als Heizgas in den Rekuperatoren 12, 13 eingesetzte Abgas verlässt diese über Heizgasausleitungen 24, 25, die an einer Verbindungsstelle 26 zu einer Abgasleitung 27 zusammengeführt werden. Um die Temperatur in den Rekuperatoren 12, 13 einstellen zu können, wird ein Teilstrom des Heizgases an einer stromab zur Verbindungsstelle 26 angeordneten Verteilerstelle 28 ausgekoppelt, über eine Rückleitung 30 zurückgeführt und stromauf zum Ventil 23 in die Abgasleitung 19 eingespeist. Die teilweise Rezirkulation des Heizgases reduziert die Temperatur des Heizgases in den Rekuperatoren 12, 13. Über eine Temperatursteuerung 31 kann der Mengenstrom des in die Rückleitung 30 eingespeisten Teilstroms in Abhängigkeit von einer beispielsweise in der MIEC-Membrananordnung 8 gemessenen Temperatur geregelt und so die Temperatur des Heizgases in den Rekuperatoren 12, 13, den jeweiligen Anforderungen angepasst werden. Um den Mengenstrom des über die Rückleitung 30 zurückgeführten Heizgases zu regeln, ist bei der Vorrichtung 1 in der Rückleitung 30 eine Gas-Fördereinrichtung in Gestalt eines Heißgasgebläses 32 mit steuerbarer Drehzahl vorgesehen.

Die in Fig. 2 gezeigte Vorrichtung 35 unterscheidet sich von der Vorrichtung 1 aus Fig. 1 lediglich durch eine andere Gas-Fördereinrichtung zum Fördern des durch die Rückleitung 30 geführten Heizgasstroms. Die Vorrichtung 35 weist einen an die Abgasleitung 27 angeschlossenen Dampfkondensator 36 auf, in welchem der Wasseranteil eines zumindest weitgehend aus Wasser und Kohlendioxid bestehenden Abgases abgeschieden und über eine Wasserleitung 37 abgeführt wird. Im Übrigen können im Rahmen der Erfindung weitere Stufen zur Reinigung des Abgases vorgesehen sein, die indes hier nicht gezeigt sind. Das weitgehend reine Kohlendioxid des Abgases wird über eine Kohlendioxidleitung 38 einer weiteren Verarbeitung oder einer Sequestration zugeführt. An einer Verteilerstelle 39 wird ein Teilstrom dieses Kohlendioxidstroms abgezweigt und über eine Leitung 40 einem regelbaren Verdichter 41 zugeführt. Das verdichtete Kohledioxid wird als Treibgas in einer Injektordüse 42 eingesetzt, die saugseitig über einen Leitungsabschnitt 43 der Rückleitung 30 mit der Abgasleitung 27 strömungsverbunden ist. Bei der Injektordüse 42 handelt es sich beispielsweise um einen Gasstrahl-Injektor oder um einen Luftstromverstärker. Im Betrieb der Vorrichtung 35 erzeugt der aus dem Verdichter 41 herangeführte Kohlendioxidstrom in der Injektordüse 42 einen Unterdruck, mittels dessen der über den Leitungsabschnitt 43 herangeführten Teilstrom in die Injektordüse 42 eingesaugt und gemeinsam mit den Kohlendioxidstrom in die Abgasleitung 19 eingespeist wird. Der Mengenstrom des an der Verteilerstelle 28 über die Rückleitung 30 zurückgeführten Heizgases kann über den mittels des Verdichters 41 einstellbaren Mengenstrom und die damit einhergehende Geschwindigkeit des Kohlendioxidstroms in der Injektordüse 42 geregelt werden. Bei der Ausführungsform nach Fig. 2 bedarf es somit in der Rückleitung 30 keiner Heißgasgebläse o.ä. zur Rückführung des Heizgases.

In einer hier nicht gezeigten weiteren Variante der Erfindung wird die Restwärme des Abgases aus der Abgasleitung 27 dazu genutzt, Wasser zu verdampfen und als Heißdampf in die Rückleitung 30 einzuspeisen. Dieser Heißdampfstrom kann - analog zum verdichteten Kohlendioxidstrom bei der Vorrichtung 35 - dazu genutzt werden, an einer Injektordüse (entsprechend der Injektordüse 42 in Fig. 2) einen Teilstrom des über die Abgasleitung 27 geführten Heizgases einzusaugen und in die Rückleitung 30 einzuspeisen. Auch in diesem Fall ist keine Fremdförderung des rückgeführten Heizgases erforderlich. Im Übrigen können auch mehrere der genannten Varianten zur Förderung des zurückzuführenden Heizgases miteinander kombiniert werden.

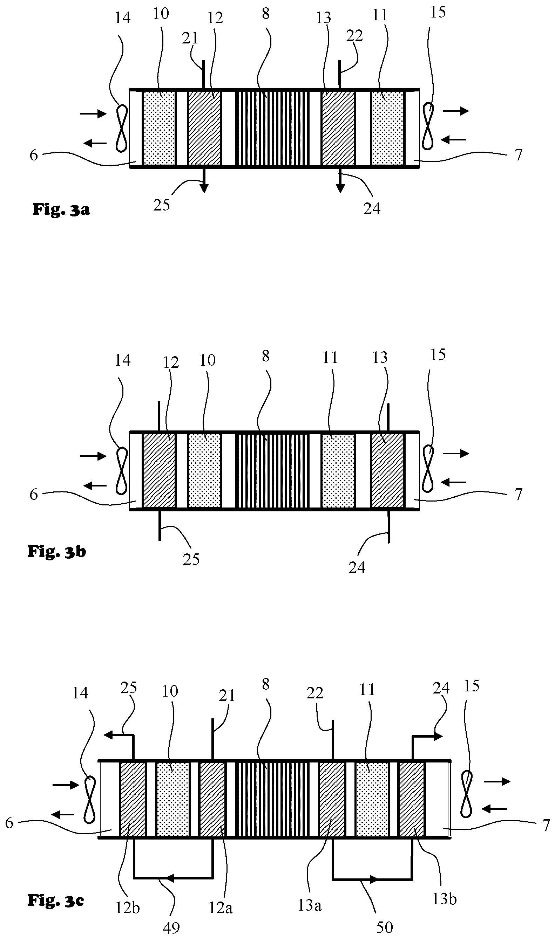

Die Fig. 3a, 3b und 3c zeigen verschiedene, in einer erfindungsgemäßen Vorrichtung einsetzbare Sauerstoff-Membrananlagen. Auch hier werden bei gleichen Merkmalen die gleichen Bezugszeichen verwendet wie in den Fig. 1 und Fig. 2.

Die in Fig. 3a dargestellte Sauerstoff-Membrananlage entspricht der in den Fig. 1 und Fig. 2 gezeigten Anordnung. Bei diesen durchströmt ein über die Luftzuführung 6 herangeführter Frischluftstrom zuerst einen Regenerator 10 und dann einen Rekuperator 12, bevor er der MIEC-Membrananordnung 8 zugeführt wird. Entsprechend durchströmt ein über die Luftzuführung 7 herangeführter Luftstrom zuerst einen Regenerator 11 und dann einen Rekuperator 13, bevor er die MIEC-Membrananordnung 8 erreicht. Mit dieser Variante kann die Temperatur des Frischluftstroms in der MIEC-Membrananordnung 8 gut gesteuert werden, die Platzierung des Rekuperators 12, 13 strömungstechnisch hinter dem jeweiligen Regenerator 10, 11 erfordert allerdings, dass die Rekuperatoren 12, 13 aus Materialien aufgebaut sein müssen, die bei hohen Temperaturen widerständig sind, was den in Fig. 3b gezeigten Aufbau vergleichsweise teuer macht.

Alternativ dazu zeigt Fig. 3b eine Ausführungsform, bei dem die Rekuperatoren 12, 13 und die Regeneratoren 10, 11 im Strömungsweg umgekehrt angeordnet sind: Ein über die Luftzuführung 6 herangeführter Frischluftstrom durchläuft zuerst den Rekuperator 12 und dann den Regenerator 10, bevor er der MIEC-Membrananordnung 8 zugeführt wird. Entsprechend durchströmt ein über die Luftzuführung 7 herangeführter Luftstrom zuerst den Rekuperator 13 und dann den Regenerator 10, bevor er die MIEC-Membrananordnung 8 erreicht. Bei dieser Ausgestaltung genügen Rekuperatoren 12, 13, die bei tieferen Temperaturen arbeiten und dementsprechend aus weniger temperaturfesten und daher kostengünstigeren Materialen aufgebaut sein können; die Ausnutzung der Abwärme ist insgesamt jedoch schwächer als bei der in Fig. 3a gezeigten Variante, da insbesondere die Wirkung des jeweiligen Rekuperators 10, 11 geschmälert wird.

Bei der in Fig. 3c gezeigten Anordnung sind die Rekuperatoren zweigeteilt und strömungstechnisch sowohl vor wie auf hinter dem Regenerator angeordnet. Ein über die Luftzuführung 6 herangeführter Frischluftstrom durchströmt zuerst einen Niedertemperator-Rekuperator 12b, dann einen Regenerator 10 und anschließend einen Hochtemperatur-Rekuperator 12a, bevor er der MIEC-Membrananordnung 8 zugeführt wird. Entsprechend durchströmt ein über die Luftzuführung 7 herangeführter Luftstrom zuerst einen Niedertemperatur-Rekuperator 13b, dann einen Regenerator 11 und anschließend einen Hochtemperatur-Rekuperator 13a, bevor er die MIEC-Membrananordnung 8 erreicht. Das aus der Heizgaszuleitung 21, 22 heranströmende heiße Abgas wird, in Gegenstrom zum Frischluftstrom, zuerst in den jeweiligen Hochtemperatur-Rekuperator 12a, 13a eingeleitet, in dem es einen Teil seiner Wärme an den bereits im Niedertemperatur-Rekuperator 12b, 13b und den Regenerator 10, 11 erhitzten Frischluftstrom abgibt, und dann über eine Leitung 44, 45 dem Niedertemperatur-Rekuperator 12a, 12b zugeführt, in dem es zur Vorwärmung des jeweiligen Frischluftstroms dient. Anschließend strömt das abgekühlte Heizgas in die Heizgasausleitung 25, bzw. 26 ein. Bei dieser Variante kann mehr Wärmeenergie aus dem Abgas auf den Frischluftstrom übertragen werden als bei den in den Fig. 3a und Fig. 3b gezeigten Ausführungsformen, nachteilig sind freilich die vergleichsweise hohen Installationskosten für jeweils zwei Rekuperatoren 12a, 12b; 13a, 13b sowie der Umstand, dass durch die zusätzliche Wärmeübertragung an den Rekuperatoren 12b, 13b zugleich die Wirkung des jeweiligen Regenerators 10, 11 geschmälert wird.

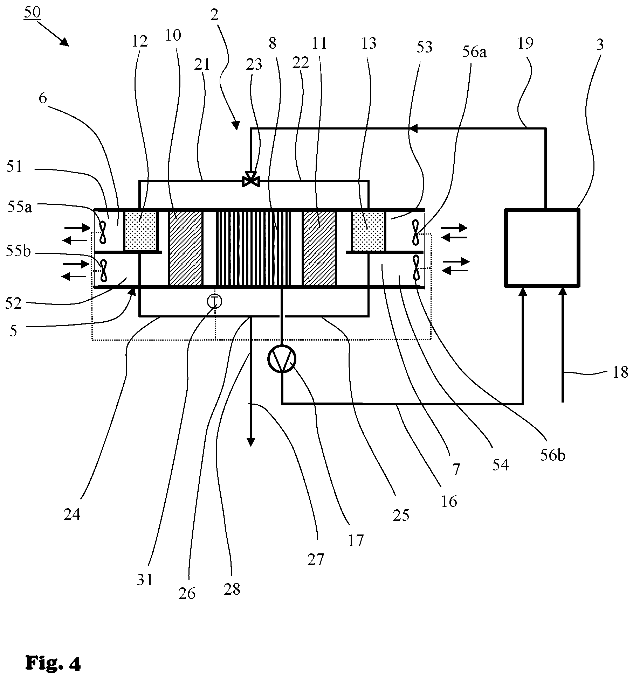

Bei der in Fig. 4 gezeigten Ausführungsform einer erfindungsgemäßen Vorrichtung 50 findet keine Rezirkulation des im Rekuperator eingesetzten Heizgases statt. Stattdessen ist ein erster Abschnitt der Luftzuführung 6 in eine Eingangsleitung 51 und eine Bypassleitung 52 aufgeteilt, und ein erster Abschnitt der Luftzuführung 7 ist in eine Eingangsleitungen 53 und eine Bypassleitung 54 aufgeteilt. Die Eingangsleitungen 51, 53 und die zugehörigen Bypassleitungen 52, 54 münden in der Luftzuführung 6, 7 jeweils vor Erreichen der MIEC-Membrananordnung 8 ineinander ein. Nur in den Eingangsleitungen 51, 53 befindet sich ein Rekuperator 12, 13. Jede der Leitungen 51, 52, 53, 54, ist mit einem Gebläse 55a, 55b; 56a, 56b ausgerüstet, die mittels einer hier nicht gezeugten Steuereinrichtung angesteuert werden können. Die Rekuperatoren 12, 13 sind, wie Vorrichtungen 1, 35 auch, über Heizgaszuleitungen 21, 22 an die Abgasleitung 19 der Oxyfuel-Einrichtung angeschlossen. Über Heizgasausleitungen 24, 25 wird das in den Rekuperatoren 12, 13 eingesetzte Heizgas in eine Abgasleitung 27 eingespeist und abgeführt. Alternativ zu der hier gezeigten Ausgestaltung kann auch eine Leitungsanordnung vorgesehen sein, in der nur ein Rekuperator und ein Gebläse angeordnet ist, bei dem jedoch mittels einer Klappenanordnung eine wechselweise Zuführung eines rekuperativ beheizten Teilstroms der Frischluft in die Luftzuleitungen 6, 7 möglich ist.

Im Betrieb der Vorrichtung 50 wird ein erster Teilstrom des Frischluftstroms über die Eingangsleitung 51 und durch den Rekuperator 12 geführt, während ein zweiter Teilstrom über die Bypassleitung 52, am Rekuperator 12 vorbei, geführt wird. Die beiden Teilströme werden anschließend, noch vor Erreichen der MIEC-Membrananordnung 8, miteinander vermischt. Bei Umkehrung der Strömungsrichtung wird ein erster Teilstrom des jeweiligen Frischluftstroms über die Eingangsleitung 53 und durch den Rekuperator 13 geführt, während ein zweiter Teilstrom, am Rekuperator 13 vorbei, über die Bypassleitung 54 geführt wird. Die Abluftströme werden jeweils vollständig am jeweiligen Rekuperator 12, 13 vorbei über die jeweilige Eingangsleitung 53, 51 abgeführt; abluftseitig sind die Eingangsleitungen 53, 51 dazu mittels hier nicht gezeigter Klappen geschlossen. Die Temperaturregelung des der MIEC-Membrananordnung 8 zugeführten Frischluftstroms erfolgt bei der Vorrichtung 50 über eine Steuerung der Mengenströme der jeweils über die Eingangsleitungen 51, 53 und die Bypassleitungen 52, 54 geführten Teilströme des Frischluftstroms mittels einer Temperatursteuerung 31. Eine Rezirkulation eines Teilstroms des Heizgases in den Rekuperatoren 12, 13 ist bei dieser Ausführungsform also nicht erforderlich.

**Bezugszeichenliste**

| | | | |
|---|---|---|---|
| 1 | Vorrichtung | 29 | - |
| 2 | Sauerstoff-Membrananlage | 30 | Rückleitung |
| 3 | Oxyfuel-Einrichtung | 31 | Temperatursteuerung |
| 4 | - | 32 | Heißgasgebläse |
| 5 | Gehäuse | 33 | - |
| 6 | Luftzuführung | 34 | - |
| 7 | Luftzuführung | 35 | Vorrichtung |
| 8 | MIEC-Membrananordnung | 36 | Dampfkondensator |
| 9 | - | 37 | Wasserleitung |
| 10 | Regenerator | 38 | Kohlendioxidleitung |
| 11 | Regenerator | 39 | Verteilerstelle |
| 12, 12a, 12b | Rekuperator | 40 | Leitung |
| 13, 13a, 13b | Rekuperator | 41 | Verdichter |
| 14 | Gebläse | 42 | Injektordüse |
| 15 | Gebläse | 43 | Leitungsabschnitt |
| 16 | Sauerstoffausleitung | 44 | Leitung |
| 17 | Vakuumpumpe | 45 | Leitung |
| 18 | Brennstoffzuleitung | 46 | - |
| 19 | Abgasleitung | 47 | - |
| 20 | - | 48 | - |
| 21 | Heizgaszuleitung | 49 | - |
| 22 | Heizgaszuleitung | 50 | Vorrichtung |
| 23 | Ventilanordnung | 51 | Eingangsleitung |
| 24 | Heizgasausleitung | 52 | Bypassleitung |
| 25 | Heizgasausleitung | 53 | Eingangsleitung |
| 26 | Verbindungsstelle | 54 | Bypassleitung |
| 27 | Abgasleitung | 55a, 55b | Gebläse |
| 28 | Verteilerstelle | 56a, 56b | Gebläse |

## Patentansprüche

1. Verfahren zum Verbrennen eines Brennstoffs mit Sauerstoff, der
vor Ort aus Luft mittels einer eine MIEC-Membrananordnung (8) aufweisenden Sauerstoff-Membrananlage (2) hergestellt wird, die als Membran eine Elektronen- und gleichzeitig Oxidionen-leitende Membran (MIEC-Membran) aufweist, wobei
- ein erhitzter Frischluftstrom durch die MIEC-Membrananordnung (8) geführt wird,
- der Sauerstoff an der MIEC-Membrananordnung (8) aus dem Frischluftstrom durch Anlegen einer Druckdifferenz entzogen und auf einer Permeatseite der MIEC-Membrananordnung (8) als Sauerstoffstrom über eine Sauerstoffausleitung (16) abgeführt wird,
- der Frischluftstrom nach Abtrennen des Sauerstoffs als Abluftstrom abgeführt wird und die im Abluftstrom enthaltene Wärmeenergie zumindest teilweise zum Erwärmen des Frischluftstroms vor dessen Zuführung an die MIEC-Membrananordnung (8) eingesetzt wird,
**dadurch gekennzeichnet, dass**
- der Sauerstoffstrom aus der Sauerstoffausleitung (16) in einer Oxyfuel-Einrichtung (3) zum Verbrennen eines Brennstoffs unter Erzeugung eines heißen Abgases genutzt wird und
- zumindest ein Teilstrom des heißen Abgases aus der Oxyfuel-Einrichtung (3) als Heizgasstrom einem Rekuperator (12, 12a, 12b; 13, 13a, 13b) zugeführt wird und dort in indirekten thermischen Kontakt mit zumindest einem Teil des Frischluftstroms gebracht wird, welcher der MIEC-Membrananordnung (8) zugeführt wird.

2. Verfahren nach Anspruch 1, **dadurch gekennzeichnet, dass** in der Sauerstoff-Membrananlage (8) abwechselnd ein Frischluftstrom von einer ersten Luftzuführung über die MIEC-Membrananordnung (8) zu einer zweiten Luftzuführung und in Gegenrichtung zurück geführt wird, wobei er jeweils nach Durchlaufen der MIEC-Membrananordnung (8) Wärme auf einen stromab zur MIEC-Membrananordnung (8) angeordneten Regenerator (10, 11) überträgt, an dem der in Gegenrichtung geführte Frischluftstrom vor Durchlaufen der MIEC-Membrananordnung (8) erwärmt wird.

3. Verfahren nach Anspruch 1 oder 2, **dadurch gekennzeichnet, dass** ein regelbarer Teilstrom des im Rekuperator (12, 12a, 12b; 13, 13a, 13b) beim thermischen Kontakt mit dem Frischluftstrom abgekühlten Heizgasstroms über eine Rückleitung (30) zurückgeführt und in den dem Rekuperator (12, 12a, 12b; 13, 13a, 13b) zuzuführenden Heizgasstrom eingespeist wird, so dass eine gezielte Einstellung der Temperatur des Heizgasstromes am Eintritt in den Rekuperator (12, 12a, 12b; 13, 13a, 13b) durch Variation des Verhältnisses der Heizgasströme zueinander ermöglicht wird.

4. Verfahren nach Anspruch 3, **dadurch gekennzeichnet, dass** aus dem Heizgasstrom, nach Durchlaufen des Rekuperators (12, 12a, 12b; 13, 13a, 13b), ein Kohlendioxidstrom abgetrennt, verdichtet und der verdichtete Kohlendioxidstrom als antreibender Treibgasstrom einer Injektordüse (47) zugeführt wird, mittels der der zum Rekuperator (12, 12a, 12b; 13, 13a, 13b) zurückzuführende Teilstrom des Heizgasstroms eingesaugt und zusammen mit dem abgetrennten Kohlendioxidstrom in den dem Rekuperator (12, 12a, 12b; 13, 13a, 13b) zuzuführenden Heizgasstrom eingespeist wird.

5. Verfahren nach einem Ansprüche 3 oder 4, **dadurch gekennzeichnet, dass** die Wärme von zumindest einem Teilstrom des Abgases und/oder des Heizgasstroms zur Erzeugung von Heißdampf eingesetzt und der erzeugte Heißdampf als antreibender Treibgasstrom einer Injektordüse (42) zugeführt wird, mittels der der zum Rekuperator (12, 12a, 12b; 13, 13a, 13b) zurückzuführende Teilstrom des Heizgasstroms eingesaugt und zusammen mit dem Heißdampf in den dem Rekuperator (12, 12a, 12b; 13, 13a, 13b) zugeführten Heizgasstrom eingespeist wird.

6. Verfahren nach einem der Ansprüche 3 bis 5, **dadurch gekennzeichnet, dass** der Mengenstrom des zum Rekuperator (12, 12a, 12b; 13, 13a, 13b) zurückgeführten Teilstroms des Heizgasstroms in Abhängigkeit von einer gemessenen Temperatur geregelt wird.

7. Verfahren nach einem der vorhergehenden Ansprüche, **dadurch gekennzeichnet, dass** von dem der MIEC-Membrananordnung (8) zuzuführenden Frischluftstrom ein regelbarer Teilstrom in einem Rekuperator (12, 12a, 12b; 13, 13a, 13b) mit dem Heizgasstrom in thermischen Kontakt gebracht und dem übrigen Frischluftstrom vor dessen Zuführung an die MIEC-Membrananordnung (8) beigemischt wird.

8. Vorrichtung zum Verbrennen eines Brennstoffs unter Einsatz von in einer MIEC-Membrananlage erzeugtem Sauerstoff,
- mit einer Sauerstoff-Membrananlage (2), die ein Gehäuse (5) aufweist, in welchem ein Luftströmungsweg, eine Sauerstoffausleitung (16) und eine den Luftströmungsweg und die Sauerstoffausleitung (16) voneinander trennende MIEC-Membrananordnung (8) angeordnet ist, die nur für Sauerstoff bei hoher Temperatur durchlässig ist, wobei die Sauerstoffausleitung (16) mit einer Vakuumpumpe (17) und der Luftströmungsweg mit einem Gebläse (14, 15) zum Anströmen der MIEC-Membrananordnung (8) mit einem Frischluftstrom ausgerüstet ist, und in einer - in Richtung des Frischluftstroms gesehen - stromauf zur MIEC-Membrananordnung (8) angeordneten ersten Luftzuführung (6) des Luftströmungsweges ein Rekuperator (12, 12a, 12b; 13, 13a, 13b) zum Aufnehmen von Wärme aus einem über eine Heizgaszuleitung (21, 22) herangeführtem Heizgasstrom angeordnet ist,
- und mit einer Oxyfuel-Einrichtung (3) zum Verbrennen eines Brennstoffs mit Sauerstoff, die mit einer Brennstoffzuleitung (18), einer Sauerstoffzuleitung und einer Abgasleitung (19, 27) ausgerüstet ist, wobei die Sauerstoffzuleitung mit der Sauerstoffausleitung (16) der Sauerstoff-Membrananlage (2) und die Abgasleitung (19) mit der Heizgaszuleitung (21, 22) des Rekuperators (12, 12a, 12b; 13, 13a, 13b) strömungsverbunden ist und Mittel zum Regeln des Mengenstroms des dem Rekuperator (12, 12a, 12b; 13, 13a, 13b) zugeführten Heizgases und/oder dem Mengenstrom des dem Rekuperator (12, 12a, 12b; 13, 13a, 13b) zugeführten Frischluftstroms vorgesehen sind.

9. Vorrichtung nach Anspruch 8, **dadurch gekennzeichnet, dass** der Luftströmungsweg mit einer stromab zur MIEC-Membrananordnung angeordneten zweiten Luftzuführung (7) ausgerüstet ist und eine Einrichtung (14, 15) zum wechselweisen Führen eines Frischluftstroms durch den Luftströmungsweg von der ersten Luftzuführung (6) zur zweiten Luftzuführung (7) und zurück vorgesehen ist, wobei in jeder der Luftzuführungen (6, 7) ein Regenerator (10, 11) zum Aufnehmen von Wärme aus der durch die jeweilige Luftzuführung (6, 7) strömenden Luft sowie ein mit einer Heizgasleitung (21, 22) ausgerüsteter Rekuperator (12, 12a, 12b; 13, 13a, 13b) angeordnet ist, welche Heizgaszuleitungen (21, 22) der Rekuperatoren (12, 12a, 12b; 13, 13a, 13b) mit der Abgasleitung (19) der Oxyfuel-Einrichtung (2) strömungsverbunden sind.

10. Vorrichtung nach Anspruch 8 oder 9, **dadurch gekennzeichnet, dass** von der Heizgaszuleitung (21, 22), oder den Heizgaszuleitungen (21, 22), stromab zum jeweiligen Rekuperator (12, 12a, 12b; 13, 13a, 13b), eine mit einer Gas-Fördereinrichtung ausgerüstete Rückleitung (30) zum Rückführen eines Teilstroms des durch den Rekuperator (12, 12a, 12b; 13, 13a, 13b), geführten Heizgasstroms abzweigt, die stromauf zum Rekuperator (12, 12a, 12b; 13, 13a, 13b) in die Abgasleitung (19, 27) oder die Heizgaszuleitung (21, 22) einmündet.

11. Vorrichtung nach einem der Ansprüche 8 bis 10, **dadurch gekennzeichnet, dass** die Gas-Fördereinrichtung ein in der Rückleitung (30) integriertes Heißgasgebläse (32) aufweist.

12. Vorrichtung nach einem der Ansprüche 8 bis 11, **dadurch gekennzeichnet, dass** die Gas-Fördereinrichtung eine in der Rückleitung (30) integrierte, mit einer Zuleitung (45) für einen Treibgasstrom sowie mit einer Zuleitung (43) für den zurückzuführenden Teilstrom des Heizgases ausgerüstete Injektordüse (42), wie etwa ein Gasstrahl-Injektor oder ein Luftstromverstärker, aufweist.

13. Vorrichtung nach Anspruch 12, **dadurch gekennzeichnet, dass** die Abgasleitung (19, 27) der Oxyfuel-Einrichtung (3), stromab zu den Regeneratoren (10, 11), mit einer Einrichtung (36) zum Abscheiden von Kohlendioxid verbunden ist, die über eine mit einer Kompressionseinrichtung (41) ausgerüstete Kohlendioxid-Abzugsleitung (40) mit der Zuleitung für den Treibgasstrom der Injektordüse (42) strömungsverbunden ist.

14. Vorrichtung nach Anspruch 12 oder 13, **dadurch gekennzeichnet, dass** die Abgasleitung (19, 27) der Oxyfuel-Einrichtung (3), stromab zu den Regeneratoren (10, 11), mit einer Einrichtung zum Erzeugen von Heißdampf aus Wasser strömungsverbunden ist, die über eine Heißdampfleitung mit der Zuleitung für den Treibgasstrom der Injektordüse (42) strömungsverbunden ist.

15. Vorrichtung nach einem der Ansprüche 8 bis 14, **dadurch gekennzeichnet, dass** in jeder der Luftzuführungen (6, 7), jeweils in Strömungsrichtung des Frischluftstroms gesehen, nacheinander ein Rekuperator (12, 12a, 12b; 13, 13a, 13b) und ein Regenerator (10, 11), ein Regenerator (10, 11) und ein Rekuperator (12, 12a, 12b; 13, 13a, 13b) oder ein in einem zweiteiligen Rekuperator (12a, 12b; 13a, 13b) aufgenommener Regenerator (10, 11) vorgesehen ist.

16. Vorrichtung nach einem der Ansprüche 8 bis 15, **dadurch gekennzeichnet, dass** die erste und/oder die zweite Luftzuführung (6, 7) jeweils mit einer Eingangsleitung (51, 53) und einer an dem Rekuperator (12, 12a, 12b; 13, 13a, 13b) oder den Rekuperatoren (12, 12a, 12b; 13, 13a, 13b) vorbeiführende Bypassleitung (52, 54) strömungsverbunden ist/sind, und eine Steuerung zum Regeln der Mengenströme der über die jeweilige Eingangsleitung (51, 53) bzw. die zugehörige Bypassleitung (52, 54) geführten Teilströme des der MIEC-Membrananordnung (8) zuzuführenden Frischluftstroms vorgesehen ist.

17. Vorrichtung nach einem der Ansprüche 8 bis 16, **dadurch gekennzeichnet, dass** als Oxyfuel-Einrichtung (3) eine Einrichtung zum Schmelzen oder Flüssighalten von Glas oder Erwärmen und Schmelzen von Metallen vorgesehen ist.
